(19) **Europäisches Patentamt European Patent Office Office européen des brevets**

(11) **EP 4 474 494 A1**

(12) **EUROPEAN PATENT APPLICATION**
published in accordance with Art. 153(4) EPC

(43) Date of publication:
**11.12.2024 Bulletin 2024/50**

(21) Application number: **23784752.0**

(22) Date of filing: **04.04.2023**

(51) International Patent Classification (IPC):
***C21D 8/12*** (2006.01)    ***C22C 38/00*** (2006.01)
***C22C 38/06*** (2006.01)    ***H01F 1/147*** (2006.01)

(52) Cooperative Patent Classification (CPC):
**C21D 8/12; C22C 38/00; H01F 1/147;** C22C 38/06

(86) International application number:
**PCT/JP2023/013939**

(87) International publication number:
**WO 2023/195466 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.04.2022 JP 2022062583**

(71) Applicant: **NIPPON STEEL CORPORATION**
**Chiyoda-ku**
**Tokyo 100-8071 (JP)**

(72) Inventors:
• **YASUDA, Masato**
  **Tokyo 100-8071 (JP)**
• **HAMAMURA, Hideyuki**
  **Tokyo 100-8071 (JP)**
• **MORISHIGE, Nobusato**
  **Tokyo 100-8071 (JP)**
• **YAMAMOTO, Shinji**
  **Tokyo 100-8071 (JP)**
• **SUGIYAMA, Kimihiko**
  **Tokyo 100-8071 (JP)**

(74) Representative: **Vossius & Partner**
**Patentanwälte Rechtsanwälte mbB**
**Siebertstrasse 3**
**81675 München (DE)**

(54) **GRAIN-ORIENTED ELECTROMAGNETIC STEEL SHEET AND PRODUCTION METHOD FOR SAME**

(57)    The present invention has as its object to provide grain-oriented electrical steel sheet better improved in core loss in control of magnetic domains for forming laser grooves in cold rolled steel sheet. The present invention provides grain-oriented electrical steel sheet meeting the following requirements for achieving the object:

That is, it provides grain-oriented electrical steel sheet comprising a base material steel sheet having a plurality of grooves on the surface of the steel sheet and a glass coating on the surface of the base material steel sheet, in which grain-oriented electrical steel sheet, an absolute value of an angle θ formed by a direction perpendicular to a rolling direction and a sheet thickness direction of the base material steel sheet and a longitudinal direction of the grooves is 0 to 40°, a width W of the grooves is 20 μm to 300 μm, a depth D of the grooves is 10 μm to 40 μm, and a pitch P of the grooves in the rolling direction is 1.0 mm to 30 mm, and, when a thickness of the glass coating at flat parts of the surface of the base material steel sheet is 11, a glass coating thickness of deepest parts of the grooves in the recessed parts of the grooves is t2, and a glass coating thickness of side parts of the grooves is t3, the relationship of formula (1) is satisfied:

$$(t2+t3)/2 \geq t1 \ ... \ \text{formula (1)}$$

Fig. 2

# EP 4 474 494 A1

**Description**

FIELD

The present invention relates to grain-oriented electrical steel sheet.

BACKGROUND

Grain-oriented electrical steel sheet is steel sheet controlled in crystal orientation by a combination of cold rolling treatment and annealing treatment so that the easy magnetization axes of the crystal grains and the rolling direction match.
As art for reducing eddy current loss, one type of core loss of grain-oriented electrical steel sheet, it is known to form an insulating coating on the surface of the base material steel sheet controlled in crystal orientation. The insulating coating acts to impart not only an electrical insulation property, but also tension, rust proofness, etc. to the base material steel sheet.
Further, as another method for reducing the eddy current loss, the method of magnetic domain control which forms distortion areas or grooves formed in a direction intersecting the rolling direction at a predetermined pitch in the rolling direction so as to reduce the width of 180° magnetic domains (refining of 180°magnetic domains) is known. The methods of magnetic domain control are classified into methods which impart strain to the base material steel sheet of the grain-oriented electrical steel sheet and methods which form grooves in the surface of the base material steel sheet with coatings which apply tension to the base material steel sheet.
Grain-oriented electrical steel sheet controlled in magnetic domains by grooves can be used to produce an iron core (winding core) of a transformer. Even if performing stress relief annealing, the grooves do not disappear, so it is possible to maintain the effect of magnetic domain refining. For this reason, for winding cores, the method of magnetic domain control by formation of grooves is employed as a method for reducing the eddy current loss.

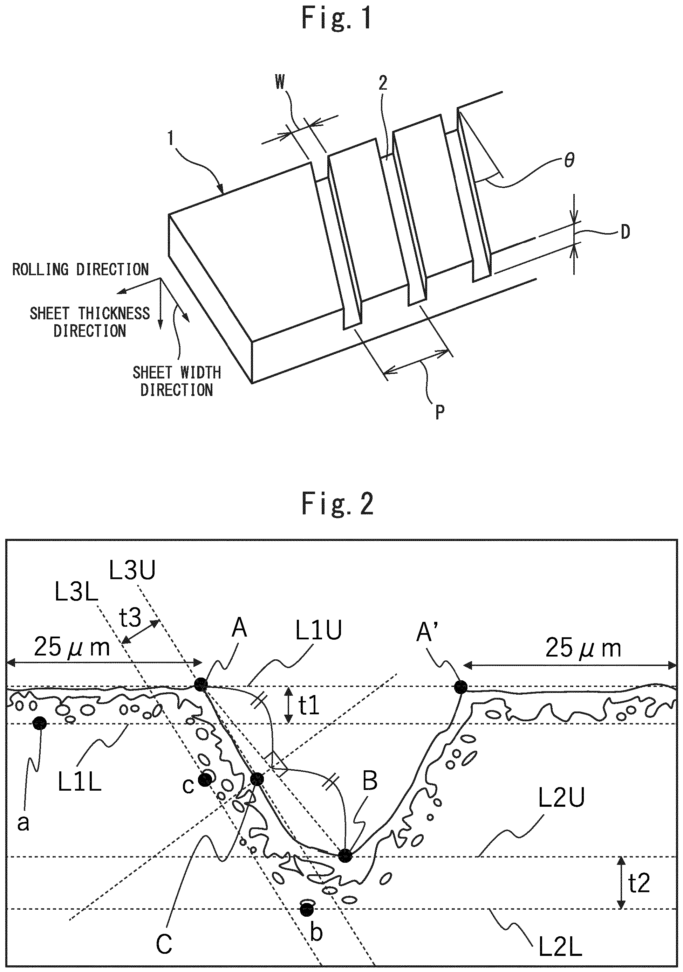

FIG. 1 is a view schematically showing an electrical steel sheet formed with grooves. FIG. 1 shows the state where the surface of a base material steel sheet 1 is formed with a plurality of grooves 2 at a pitch in the rolling direction of the base material steel sheet 1. In FIG. 1, $\theta$ shows an angle formed by the direction perpendicular to the rolling direction and the sheet thickness direction of the base material steel sheet 1 (sheet width direction) and the longitudinal direction of the grooves 2. W shows a width of the grooves 2, D shows a depth of the grooves 2, and P shows a pitch of the grooves 2 adjoining each other in the rolling direction.
Various methods have been proposed for forming grooves in electrical steel sheet. For example, PTL 1 discloses an electrolytic etching method for forming grooves in a steel sheet surface of grain-oriented electrical steel sheet by electrolytic etching. For example, PTL 2 discloses a gear press method for mechanically pressing a gear against the steel sheet surface of grain-oriented electrical steel sheet to thereby form grooves at the steel sheet surface.
However, the method using electrolytic etching requires a process of masking, etching, and mask removal. There is the problem that the process becomes more complicated compared with the mechanical method. The method using gear pressing results in wear of the tooth profile in a short time since electrical steel sheet is high in hardness. Furthermore, from the viewpoint of high speed processing, it is difficult to realize the line speed of 100 mpm or more demanded from a general ferrous metal production process.
Further, for example PTL 3 discloses a lasering method of using a laser to melt and evaporate parts struck by the laser at the steel sheet surface of grain-oriented electrical steel sheet. The lasering method is free of the problems of wear of the tooth profile and complication of the process and enables high speed processing.
In the lasering method as well, several processes for formation of grooves have been disclosed. For example, PTL 4 proposes forming grooves in cold rolled steel sheet by the lasering method but if lasering cold rolled steel sheet, in the final product, a glass coating comprised of forsterite is formed at the bottom of the grooves. The glass coating is comprised of nonmagnetic oxides, so the magnetic flux density of the steel sheet falls and the resultant deterioration of the core loss becomes a problem.

[CITATIONS LIST]

[PATENT LITERATURE]

[PTL 1] Japanese Examined Patent Publication No. 62-54873
[PTL 2] Japanese Examined Patent Publication No. 62-53579
[PTL 3] Japanese Unexamined Patent Publication No. 2003-129135
[PTL 4] WO2019/156127

[PTL 5] WO2011/007771

SUMMARY

[TECHNICAL PROBLEM]

The present invention was developed considering the above situation and has as its object the provision of grain-oriented electrical steel sheet better improved in core loss in control of magnetic domains for forming laser grooves in cold rolled steel sheet (grooves formed by laser).

[SOLUTION TO PROBLEM]

The inventors engaged in intensive studies for solving the above problem. In repeatedly studying the lasering conditions at the time of forming laser grooves, they discovered that the glass coating formed at the steel sheet surface has an effect of control of the magnetic domains and that while the magnetic flux density falls, it has the effect of improvement of the core loss. The present invention was made based on this discovery. Its gist is as follows:

[1] The grain-oriented electrical steel sheet according to one aspect of the present invention is provided with a plurality of grooves on a surface of the steel sheet and a glass coating on the surface of the base material steel sheet. An angle $\theta$ formed by a direction perpendicular to a rolling direction and a sheet thickness direction of the base material steel sheet and a longitudinal direction of the grooves is 0 to 40°, a width W of the grooves is 20 to 300 $\mu$m, a depth D of the grooves is 10 $\mu$m to 40 $\mu$m, and a pitch P of the grooves in the rolling direction is 1.0 to 30.0 mm, and, when a thickness of the glass coating at flat parts of the surface of the base material steel sheet is t1, a glass coating thickness of deepest parts of the grooves in the recessed parts of the grooves is t2, and a glass coating thickness of side parts of the grooves is t3, the relationship of formula (1) is satisfied:

$$(t2+t3)/2 \geq t1 \dots \text{formula (1)}$$

Further, preferably the relationship of formula (2) is satisfied.

$$t1 < t2 \dots \text{formula (2)}$$

[2] A method of production of grain-oriented electrical steel sheet according to another aspect of the present invention is a method of production of the grain-oriented electrical steel sheet according to the above [1],
which method of production of the grain-oriented electrical steel sheet includes

a groove forming step of lasering the surface of cold rolled steel sheet to form grooves and
an annealing step following the groove forming step,
as conditions for lasering in the groove forming step, a focused spot diameter dL of the laser in the rolling direction and a focused spot diameter dC in the sheet width direction satisfy formula (3) and an oxygen potential ($PH_2O/PH_2$) in the annealing step is 0.20 or more and 0.85 or less:

$$0.010 \leq dL/dC \leq 1.000 \dots \text{formula (3)}$$

[ADVANTAGEOUS EFFECTS OF INVENTION]

According to the present invention, it is possible to sufficiently realize the effect of magnetic domain refining and possible to obtain grain-oriented electrical steel sheet with a good core loss.

BRIEF DESCRIPTION OF DRAWINGS

FIG. 1 is a schematic view showing one example of electrical steel sheet formed with grooves on its surface.
FIG. 2 is a view showing one example of a cross-section of a base material steel sheet including grooves and a relationship with film thickness.

FIG. 3 is a view showing one example of a cross-sectional photograph of a base material steel sheet including grooves.

DESCRIPTION OF EMBODIMENTS

The inventors engaged in repeated studies for realizing the effect of magnetic domain refining to the maximum extent whereupon they discovered that by controlling the thickness of the glass coating at the surfaces of the recessed parts of the grooves, the effect of magnetic domain refining can be enjoyed to the maximum extent. Below, the constitution of the grain-oriented electrical steel sheet according to an embodiment of the present invention (below, abbreviated as the "present electrical steel sheet") will be explained.

The present electrical steel sheet is provided with a base material steel sheet having a plurality of grooves arranged in parallel at its surface and a glass coating formed at the surface of the base material steel sheet (see FIG. 1 to FIG. 3). In the present electrical steel sheet, the surface of the glass coating may also be formed with a tension coating (insulating coating). As shown in FIG. 1, at the surface of the base material steel sheet, a plurality of grooves are formed substantially in parallel so as to adjoin each other in the rolling direction of the base material steel sheet. The direction of the grooves (angle $\theta$) and width W, depth D, and pitch P of the grooves are determined considering the core loss in the same way as ordinary grain-oriented electrical steel sheet.

<Angle $\theta$ Formed by Rolling Direction of Base Material Steel Sheet and Longitudinal Direction of Grooves>

If the angle $\theta$ formed by the direction perpendicular to the rolling direction and the sheet thickness direction of the base material steel sheet (sheet width direction) and the longitudinal direction of the grooves is too large, there is no effect of magnetic domain control and the effect of improvement of the core loss can no longer be obtained, so it is made 40° or less. The angle $\theta$ is preferably smaller and may be 35° or less, 30° or less, 25° or less, 20° or less, 15° or less, 10° or less, 8° or less, 6° or less, or 5° or less. The lower limit of the angle $\theta$ is 0°, that is, the longitudinal direction of the grooves, when parallel to the sheet width direction. Note that, the direction of the angle $\theta$ is not an issue. This indicates the angle at the acute angle side in the angles formed by the longitudinal direction of the grooves and the sheet width direction. The surface of the base material steel sheet has a plurality of grooves arranged generally parallel, but the angle $\theta$ of each groove need only be in such a range.

<Groove Width W>

The "groove width W" indicates the width of the grooves at the surface of the base material steel sheet in the cross-section of the grooves (groove cross-section) at the plane vertical to the longitudinal direction of the grooves. Even if the groove width W is less than 20 $\mu$m or too narrow, the grooves do not become starting points of formation of magnetic poles, there is no effect of control of the magnetic domains, and a good core loss cannot be obtained. On the other hand, if the width becomes more than 300 $\mu$m or too wide, the grooves do not become starting points of formation of magnetic poles, there is no effect of control of the magnetic domains, only the magnetic flux density ends up remarkably falling, and a good core loss cannot be obtained. For this reason, the groove width W should be made 20 $\mu$m or more and 300 $\mu$m or less. The lower limit of the groove width W may preferably be made 25 $\mu$m, 30 $\mu$m, or 35 $\mu$m. The upper limit of the groove width W may preferably be made 250 $\mu$m, 200 $\mu$m, 150 $\mu$m, 100 $\mu$m, or 80 $\mu$m.

<Groove Depth D>

If the groove depth D is less than 10 $\mu$m or too shallow, the grooves do not become starting points of formation of magnetic poles, there is no effect of control of the magnetic domains, and a good core loss cannot be obtained. On the other, if more than 40 $\mu$m or too deep, the effect of control of magnetic domains ends up reaching saturation, only the magnetic flux density remarkably falls, and therefore a good core loss cannot be obtained. For this reason, the groove depth D may be made 10 $\mu$m or more and 40 $\mu$m or less. The lower limit of the groove depth D may preferably be 11 $\mu$m, 12 $\mu$m, 13 $\mu$m, 14 $\mu$m, or 15 $\mu$m. The upper limit of the groove depth D may preferably be 38 $\mu$m, 36 $\mu$m, 34 $\mu$m, 32 $\mu$m, 30 $\mu$m, 28 $\mu$m, or 26 $\mu$m.

<Groove Pitch P>

The "groove pitch P" is the pitch of the center lines in the longitudinal direction of the adjoining grooves in the grooves arranged substantially in parallel at the base material steel sheet surface and indicates a distance of the base material steel sheet in the rolling direction. The "center lines of grooves" are lines parallel to the longitudinal direction of the grooves passing through the center points of the grooves at the base material steel sheet surface in the groove cross-section.

If the groove pitch P is less than 1 mm or too narrow, the effect of magnetic domain control becomes saturated and just the magnetic flux density remarkably falls, so a good core loss is not obtained. On the other hand, if it is more than 30 mm or too wide, the effect of magnetic domain control is not sufficiently obtained and a good core loss is not obtained. For this reason, the groove pitch P may be 1 mm or more and 30 mm or less. The groove pitch P need not be equal pitches, but the groove pitch P with the adjoining groove may be within this range. The lower limit of the groove pitch P is preferably 1.2 mm, 1.4 mm, 1.5 mm, 1.6 mm, 1.8 mm, or 2.0 mm. The upper limit of the groove pitch P is preferably 25 mm, 20 mm, 15 mm, 10 mm, 7 mm, or 5 mm.

<Thickness of Glass coating>

The glass coating at the surfaces of the flat parts of the base material steel sheet surface at the present electrical steel sheet (parts where no grooves are formed, that is, parts other than grooves. Below, sometimes simply referred to as the "flat parts") and the laser grooves (below, sometimes simply referred to as the "grooves") will be explained. FIG. 2 is a cross-sectional view of a base material steel sheet including grooves and shows a region including a groove in a cross-section in the sheet thickness direction perpendicular to the longitudinal direction of the groove (groove cross-section). The parts connected to the two sides of the groove are flat parts.

The present electrical steel sheet is a grain-oriented electrical steel sheet wherein, when a thickness of the glass coating at the flat parts is l1, a glass coating thickness of bottom parts of the grooves (deepest parts) is t2, and a glass coating thickness of side parts of the groove is t3, the relationship of formula (1) is satisfied:

$$(t2+t3)/2 \geq t1 \ ... \ \text{formula (1)}$$

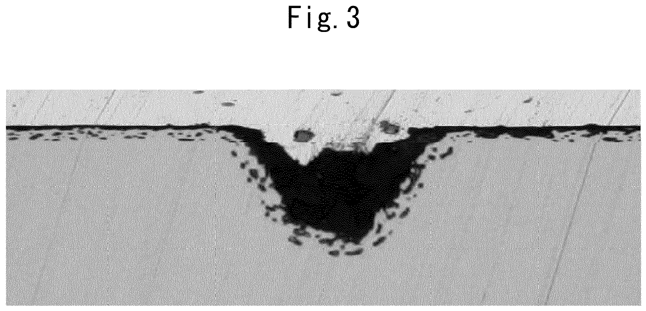

The film thicknesses l1, t2, and t3 of the parts will be explained. A glass coating has a anchoring structure. A "anchoring structure" means a structure where, like the roots of a plant, tip parts of the glass coating extend into the base material steel sheet. For this reason, at the steel sheet cross-section, sometimes tip parts of the anchoring structure appear in a state separated from the glass coating. For example, in FIG. 2, the glass coating can be confirmed visible as islands at places away from the glass coating of the flat parts and groove recess surfaces, but this is because the cross-section of the tip parts of the anchoring structure are observed. FIG. 3 shows one example of a cross-sectional phot of steel sheet including grooves. In FIG. 3, what appear to be black dots in the steel sheet are the tip parts of the anchoring structure of the glass coating. Below, the tips of the glass coating indicate the parts most separate from the glass coating surface, including not only the glass coating in the steel sheet cross-section, but also the glass coating of inset structure parts appearing to be present separated from the glass coating.

Below, the method of measurement of the thicknesses l1, t2, and t3 of the glass coating of the different parts will be explained using FIG. 2.

First, the glass coating thickness t1 of the flat parts will be explained. The intersecting points of the flat parts and the grooves (that is, the edge parts of the grooves) are designated as the point A and the point A'. The line running through the point A and the point A' is designated as L1U. That is, the line showing the glass coating surface at the flat parts of the steel sheet surface is designated as L1U. Next, among the tips of the glass coating at the flat parts in a range of within 25 μm from the point A and the point A', the bottom end position of the tip most separated from the glass coating surface (that is, L1U) (deepest position in sheet thickness direction) is designated as the point "a". Next, the line passing through the point "a" and parallel to the line L1U is designated as L1L. The distance between these L1U and L1L is designated as t1.

Next, the glass coating thickness t2 of the bottom parts (deepest parts) of the grooves will be explained. The deepest part of a recessed part surface (deepest part in sheet thickness direction) is designated as the point B and the line passing through the point B and parallel to L1U as L2U. Next, the lower end position of the end of the glass coating the furthest from L2U in the sheet width direction is designated as the point "b" and the line passing through the point "b" and parallel to L2U as L2L. The distance between the lines L2U and L2L is designated as t2.

Finally, the glass coating thickness t3 of the side parts of the grooves will be explained. The intersecting point of the perpendicular bisector of the line segment AB connecting the point A of the end part of a groove and the point B of the groove deepest part with the glass coating surface of the groove sides is designated as the point C and the line passing through the point A and the point C as L3U. Next, the end of the glass coating the furthest from L3U in glass coating at the groove sides is identified and the part the furthest from the line L3U of the end is designated as the point "c". The line passing through the point "c" and parallel to L3U is designated as L3L. The distance between the lines L3U and L3L is designated as t3.

The glass coating thicknesses at the sides of a groove are substantially equal at the two sides of the groove (side of point A side and side of point A' side at FIG. 2), so either side may be measured. Of course, it is also possible to measure the thicknesses of the glass coating at the two sides and define the average value of these as the glass coating thickness t3 of the groove sides.

The thickness of the glass coating can for example be measured by polishing a cross-section to a mirror finish, then examining the cross-section by an optical microscope or SEM. As the conditions for observation under an optical microscope or SEM, known conditions can be applied. The measured fields and the observed magnification may be suitably adjusted in accordance with the size of the grooves and thickness of the glass coating. In SEM observation, a secondary electron image may be taken or a reflected electron image may be taken.

Here, the effect of the glass coating will be explained.

Magnetic domain refining in grain-oriented electrical steel sheet is realized because the magnetic poles formed at the steel sheet surface cause the magnetostatic energy to rise and to resolve this, 180° domain walls are newly formed and the magnetic domains become narrower in width. If the magnetic domain width becomes narrower, the distance of movement of the domain walls when the steel sheet is magnetized becomes shorter and the energy loss at the time of domain wall movement is decreased resulting in a decrease in the core loss.

By coating and baking on a glass coating different in expansion coefficient from the steel sheet at a high temperature, after cooling, due to the difference in expansion coefficients of the steel sheet and the glass coating, tensile force is applied in the rolling direction, whereby the magnetic domains are refined and the core loss is improved.

Furthermore, a glass coating is comprised of nonmagnetic oxides and differs from steel sheet in magnetic permeability, so magnetic poles are formed at the interface and magnetic domains are refined. For this reason, it is believed that the glass coating becomes starting points for formation of magnetic poles and promotes magnetic domain refining to thereby reduce the core loss.

The grooves are resistant to application of tension in the rolling direction, but if forming grooves in a direction perpendicular to the rolling direction, magnetic poles are formed at the recessed part surfaces of the grooves. Due to the synergistic effect with formation of magnetic poles by the glass coating, magnetic domain refining is promoted.

On the other hand, a glass coating is comprised of nonmagnetic oxides, so the magnetic flux density of the steel sheet falls. For this reason, there is a tradeoff relationship between the core loss and the magnetic flux density. If forming the glass coating thick, at the groove parts, while magnetic domain refining is promoted, the magnetic flux density ends up falling at the steel sheet surface as a whole.

Therefore, the inventors discovered that it is possible to make the glass coating at the recessed part surfaces of the groove parts relatively thick to enjoy the effect of magnetic domain refining at the groove parts while on the other hand make the glass coating at the flat part relatively thin to suppress the drop in magnetic flux density of the steel sheet as a whole.

That is, as shown in formula (1), the thickness of the glass coating at the recessed parts of the grooves need only be made greater than the thickness of the glass coating at the flat parts.

$$(t2+t3)/2 \geq t1 \quad \text{... formula (1)}$$

t1: glass coating thickness of flat parts
t2: glass coating thickness of bottom parts of grooves (deepest parts) at recessed parts of groove
t3: glass coating thickness of side parts of grooves

Preferably, the thickness ratio [thickness ratio=$\{(t2+t3)/2\}/t1$] of the ratio of the thickness of the glass coating at the recessed parts of the grooves[$(t2+t3)/2$] and the thickness of the glass coating at the flat parts [t1] may be 1.1 or more, 1.2 or more, 1.3 or more, 1.4 or more, 1.5 or more, 1.6 or more, 1.7 or more, 1.8 or more, 1.9 or more, or 2.0 or more. The upper limit of the thickness ratio [thickness ratio=$\{(t2+t3)/2\}/t1$] is not particularly prescribed, but if considering practical operations, the thickness ratio may be 5.0 or less, 4.0 or less, or 3.0 or less.

More preferably, the glass coating thickness t1 of the flat parts should be thinner than the glass coating thickness t2 at the bottom parts (deepest parts) of the grooves (formula (2)). By making the glass coating of the bottom parts of the grooves thicker than the flat parts, a drop in the magnetic flux density of the steel sheet as a whole is suppressed, formation of magnetic poles by the grooves and glass coating is promoted, and the magnetic properties can be further improved:

$$t1 < t2 \quad \text{... formula (2)}$$

<Method of Production>

First, a known method is used to produce cold rolled steel sheet for the present electrical steel sheet. The composition of the steel sheet and the method of production of the cold rolled steel sheet are not particularly limited. A known method, for example, the composition of the steel sheet and the method of production described in PTL 5, can be employed.

However, the groove forming step forming grooves by lasering is preferably performed after the cold rolling and before the decarburization annealing step. The controllability of the shape of the grooves formed by the lasering is improved since the grooves are not cold rolled, but are decarburization annealed and finish annealed.

<Lasering Conditions>

The groove forming step will be explained. By lasering a cold rolled steel sheet, the steel sheet surface is formed with a plurality of grooves in a direction perpendicular to the rolling direction so that the groove width W, groove depth D, and predetermined pitch (groove pitch P) become the prescribed ranges. Among the lasering conditions, the type of the laser source, laser output, laser scan speed, and speed of movement of the steel sheet at the time of lasering are not particularly limited. Suitable conditions may be selected so that the groove width W, groove depth D, and predetermined pitch (groove pitch P) become the prescribed ranges.

[Laser Source]

As the laser source, for example, a fiber laser, YAG laser, semiconductor laser, $CO_2$ laser, or other high output laser generally used for industry can be used. If the grooves can be stably formed, a pulse laser or a continuous wave laser may also be used.

[Laser Output]

If the laser output is less than 200W, for forming the desired grooves, the laser scan speed remarkably falls and the industrial productivity falls, so the output should be made 200W or more. Preferably, it may be 1000W or more, more preferably 1500W or more. Further, if the laser output is more than 3000W, the required power source capacity becomes larger and the capital costs become tremendous, so this is not industrially practical, therefore the output should be made 3000W or less. Preferably, it should be 2800W or less, more preferably 2500W or less.

[Laser Scan Speed]

If the laser scan speed is a slow one of less than 5 m/s, it is necessary to slow the running speed of the steel sheet, so the speed is made 5 m/s or more. Preferably it is 20 m/s or more, more preferably 40 m/s or more. Further, if the laser scan speed is faster than 100 m/s, high output becomes correspondingly necessary and the capital costs increase, so the speed should be made 100 m/s or less. Preferably, it may be 80 m/s or less, more preferably 60 m/s or less.

[Shape of Laser Focused Spot]

The shape of the focused spot of the laser may be circular or oval somewhat broader in the sheet width direction at the base material steel sheet surface. To prevent the shape from becoming too broad, for example, the focused spot diameter: dL of the laser in the rolling direction and the focused spot diameter: dC of the laser in the sheet width direction should satisfy the relation (3). For example, the focused spot diameter: dL of the laser in the sheet width direction may be made 5 to 100 $\mu$m, the focused spot diameter: dC of the laser in the sheet width direction may be made 5 to 100 $\mu$m, the laser output may be made 200 to 3000W, and the laser scan speed V may be made 5 to 100 m/s.

$$0.010 \leq dL/dC \leq 1.000 \ \ldots \text{formula (3)}$$

If dL/dC is larger than 1, the laser spot becomes an oval shape long in the rolling direction. Control of the groove shape by the laser becomes difficult.

If dL/dC is smaller than 0.010, the laser spot becomes an oval shape superlong in the sheet width direction. In this case as well, control of the shape of the laser grooves becomes difficult.

The inventors engaged in repeated experiments and discovered that by using the above lasering conditions, it is possible to control the thickness of the melt layer at the lasered parts and that by forming an internal oxidation layer at the succeeding recrystallization annealing, the present electrical steel sheet controlled in thickness of the glass coating in the above way is obtained.

The mechanism by which the lasering conditions contribute to control of the thickness of the glass coating of the groove recessed parts is believed to be as follows:

First, the glass coating is an oxide comprised of $Mg_2SiO_4$. It is formed by reaction between the internal oxidation

layer $SiO_2$ formed by the decarburization annealing and the annealing separator MgO coated on the steel sheet surface before the finish annealing in the 1200°C high temperature annealing at the finish annealing step. At this time, a glass coating is also formed in accordance with the internal oxidation layer thickness. For example, by making the dew point of the decarburization annealing higher, it is possible to adjust the thickness of the internal oxidation layer.

By lasering the cold rolled steel sheet, the lasered parts of the cold rolled steel sheet (base material steel sheet) melt and form grooves. At the surface parts of the grooves, the crystals grow oriented, so columnar crystals are formed.

If, like in the present invention, the focused spot shape is a suitable oval shape in the steel sheet width direction, it was confirmed that the melt layer of the surfaces of the recessed parts of the grooves become suitably thicker. If the laser spot is made an oval shape suitably long in the sheet width direction, it is believed that when lasering continuously at a 40° or less angle with respect to the sheet width direction, the heat due to the lasering becomes easily transferred in the direction of groove formation and the controllability of the columnar crystals formed at the surfaces of the recessed parts of the grooves is improved. Therefore, if dL and dC are in the above-mentioned ranges, the heat input to the steel sheet becomes greater and the melt layer is formed suitably thick, so columnar crystals are formed suitably thick. In the subsequent decarburization annealing, it is believed that the grown columnar crystals become diffusion paths of oxygen, the internal oxidation layer grows, and the glass coating also becomes thicker at the finish annealing.

Therefore, the relation of formula (3) is preferably satisfied. The lower limit of dL/dC is made 0.010, but may preferably be 0.015, 0.020, 0.025, 0.030, 0.035, 0.040, 0.045, or 0.050. The upper limit of dL/dC is 1.000 (circular spot), but the shape of the laser spot should, if possible, be an oval shape long in the sheet width direction. Preferably, it is 0.980, 0.960, 0.940, 0.920, 0.900, 0.880, 0.860, 0.840, 0.820, 0.800, 0.780, 0.760, 0740, 0.720, or 0.700.

On the other hand, at the flat parts, no lasering is performed, so no melt layer is formed, therefore the internal oxidation layer does not grow to the extent at the groove parts and as a result the glass coating also is not formed as thick as the groove parts.

If satisfying the relation prescribed by dL and dC, the size of the focused spot is not particularly limited, but from the viewpoint of making the remaining recrystallized grains finer, the size of the focused spot is also preferably small. The size of the focused spot may be selected from its relation to other properties of the electrical steel sheet. Practically, the upper limit of dC may be made 300 $\mu$m, preferably 250 $\mu$m, 200 $\mu$m, 150 $\mu$m, or 100 $\mu$m.

<Assist Gas>

At the same time as the lasering, assist gas may be blown to the portion of the steel sheet where the lasering is performed. The assist gas acts to remove the constituents from the steel sheet melted or evaporated by lasering. By blowing the assist gas, the laser stably reaches the steel sheet, so grooves are stably formed. The flow rate of the assist gas is preferably, for example, made 10 to 1000 liters per minute.

Further, the assist gas is preferably air or an inert gas.

<Steps After Forming Grooves>

After forming the grooves in the cold rolled steel sheet in the groove forming step, the cold rolled steel sheet is annealed (decarburization annealing), then known methods are used for nitriding, then coating of an annealing separator mainly comprised of MgO, heating, holding, and cooling to form a glass coating.

For the decarburization conditions, known conditions can be employed, but for further reduction of the core loss, it is effective to more precisely control the behavior in forming the glass coating. For example, the decarburization annealing conditions are made raising the temperature of the steel sheet formed with the grooves up to 800 to 880°C, then making the annealing atmosphere a hydrogen-inert gas atmosphere and the oxygen potential ($PH_2O/PH_2$) 0.20 to 0.85, holding for 60 seconds or more, then cooling. If the oxygen potential ($PH_2O/PH_2$) is less than 0.20, decarburization is not sufficient and the final product becomes inferior in magnetic properties. Further, the supply of oxygen becomes insufficient, no internal oxidation layer is formed much at all, and as a result, almost no glass coating is obtained, so the magnetic properties remarkably deteriorate. On the other hand, if the oxygen potential ($PH_2O/PH_2$) is larger than 0.85, the supply of oxygen becomes excessive and an internal oxidation layer is formed thick not only at the groove recessed parts having the melt layer acting as a diffusion path, but also the flat parts. As a result, a thick glass coating is formed outside of the groove recessed parts as well and deterioration of the core loss is triggered by the drop in magnetic flux density. The glass coating is a nonmetallic layer. If formed overly thick, a drop in the magnetic flux density is caused.

Furthermore, by also controlling the conditions of the temperature raising step of the decarburization annealing, it becomes possible to promote the internal oxidation at the following decarburization annealing step and form a thick glass coating at the following finish annealing step. For example, in the temperature raising process of the decarburization annealing, the dwell time at 200 to 700°C may preferably be made 50 seconds or less. If the dwell time is 50 seconds or less, in the following soaking process of the decarburization annealing, internal oxidation is promoted, so this is preferable. Further, the oxygen potential ($PH_2O/PH_2$) at the temperature raising process of the decarburization annealing is also preferably 0.85 or less, more preferably 0.60 or less. If 0.85 or less, in the following soaking process of the decarburization annealing, internal oxidation becomes easily promoted, so this is preferable.

The nitriding can be performed employing known methods. The amount of nitriding can, for example, be made 50 to 400 ppm in range, but if 180 to 250 ppm in range, good properties are obtained.

The glass coating is formed by the step of winding the steel sheet coated with the annealing separator in a coil and holding it at a temperature of 1150 to 1250°C for 10 to 30 hours, then cooling it. For the composition of the annealing separator, a known one may be employed. For example, it may be made one comprised of MgO: 100 parts by mass and $TiO_2$: 5 parts by mass to which, as an additive, for example, $FeCl_2$ is added to 200 ppm converted as chlorine.

For further reduction of the core loss, the moisture release rate (room temperature to 700°C) from the annealing separator at the finish annealing may preferably be 0.5% or more and 6.0% or less. If the moisture release rate is 0.5% or more and 6.0% or less, in the process of temperature rise in the finish annealing, agglomeration of the internal oxidation layer to the steel sheet surface side is suppressed and formation of fine grains in the glass coating is promoted.

It is possible to impart tension to the steel sheet even by only the glass coating, but to enhance the effect of control of magnetic domains, it is also possible to form a tension coating (insulating coating) on the glass coating. As the tension coating, for example, it is possible to use one mainly comprised of aluminum phosphate. The thickness may be made about 1 $\mu$m.

EXAMPLES

Next, examples of the present invention will be explained. The examples are just illustrations of the present invention. The present invention is not limited to these examples.

<Example 1>

A slab comprised of Si: 3.3 mass%, Mn: 0.10 mass%, S: 0.006 mass%, C: 0.060 mass%, acid soluble A1: 0.027 mass%, and N: 0.008 mass% and having a balance of Fe and impurities was used as a material and was hot rolled, annealed as a hot rolled sheet, and cold rolled in that order by known methods to obtain steel sheet with a final sheet thickness of 0.22 mm.

Next, the surface of the steel sheet was lasered to form a plurality of grooves extending in directions intersecting the rolling direction in the rolling direction. The groove forming direction was made a direction slanted by 10° to 50° in the rolling direction with respect to the width direction of the steel sheet, the groove width was made 3 to 320 $\mu$m, and the groove depth was made 0.9 to 32 $\mu$m.

The lasering conditions were made a laser output of 2000W and a laser scan speed of 45 m/s. The focused spot diameter ratio of the laser in the rolling direction was controlled to 0.25 to 1.50 in range.

At the time of lasering, to efficiently remove metal of the steel sheet melted and evaporated by the laser, air was sprayed as assist gas in 100 liters/min.

The cold rolled steel sheet formed with the grooves was decarburized and further nitrided. The decarburization annealing conditions were raising the temperature to 850°C, then holding for 60 seconds for cooling. The decarburization annealing atmosphere was a hydrogen-nitrogen atmosphere. The oxygen potential ($PH_2O/PH_2$) was made 0.30 to 0.50. Further, the amount of nitriding was made 200 ppm.

After that, an annealing separator mainly comprised of MgO was coated to 4 g/m$^2$ per surface. The composition of the annealing separator was MgO: 100 parts by mass and $TiO_2$ : 5 parts by mass. $FeCl_2$ was added to 200 ppm converted as chlorine.

Next, the steel sheet coated with the annealing separator was taken up in a coil, held at 1200°C for 20 hours, then cooled to form a glass coating on the surface. Further, a tension coating mainly comprised of aluminum phosphate was formed to a thickness of 1 $\mu$m to obtain grain-oriented electrical steel sheet. The tension at this time was 12 MPa, including the glass coating, with respect to the rolling direction.

The core loss W17/50 after imparting a tension insulating coating (energy loss measured under 1.7T, 50Hz excitation conditions) and magnetic flux density B8 (magnetic flux density under 800A/m of magnetizing force) were measured. The results are shown in Table 1.

In Nos. A1 to A11 and al to a16, the magnetic flux densities were all the same extent. However, in Nos. A1 to A11 where the core loss was a good one of less than 0.750W/kg, while in Nos. a1 to a16, the groove shape or the relationship of the glass coating thickness was outside the above prescribed values, the core loss was a poor of 0.750W/kg or more.

<Example 2>

A slab comprised of Si: 3.3 mass%, Mn: 0.10 mass%, S: 0.006 mass%, C: 0.060 mass%, acid soluble A1: 0.027 mass%, and N: 0.008 mass% and having a balance of Fe and impurities was used as a material and was hot rolled, annealed as a hot rolled sheet, and cold rolled in that order by known methods to obtain steel sheet with a final sheet thickness of 0.22 mm.

Next, the surface of the steel sheet was lasered to form a plurality of grooves extending in directions intersecting the rolling direction at a 3 mm pitch in the rolling direction. The groove forming direction was made a direction slanted by 10° in the rolling direction with respect to the width direction of the steel sheet, the groove width was made 30 $\mu$m, and the groove depth was made 25 $\mu$m.

The lasering conditions were made a laser output of 1800 to 2000W and a laser scan speed of 40 to 60 m/s. The focused spot diameter ratio of the laser in the rolling direction was controlled to 0.03 to 27 in range.

At the time of lasering, to efficiently remove metal of the steel sheet melted and evaporated by the laser, air was sprayed as assist gas in 100 liters/min.

The cold rolled steel sheet formed with the grooves was decarburized and further nitrided. The decarburization annealing conditions were raising the temperature to 850°C, then holding for 60 seconds for cooling. The decarburization annealing atmosphere was a hydrogen-nitrogen atmosphere. The oxygen potential ($PH_2O/PH_2$) was made 0.12 to 1.10. Further, the amount of nitriding was made 200 ppm.

After that, an annealing separator mainly comprised of MgO was coated to a coating amount of 4 g/m$^2$ per side. The composition of the annealing separator was one comprised of MgO: 100 parts by mass and TiO$_2$: 5 parts by mass to which, for example, FeCl$_2$ is added to 200 ppm converted as chlorine.

Next, the steel sheet coated with the annealing separator was taken up in a coil, held at 1200°C for 20 hours, then cooled to form a glass coating on the surface. Further, a tension coating mainly comprised of aluminum phosphate was formed to a thickness of 1 $\mu$m to obtain grain-oriented electrical steel sheet. The tension at this time was 12 MPa, including the glass coating, with respect to the rolling direction.

The core loss W17/50 after imparting a tension insulating coating (energy loss measured under 1.7T, 50Hz excitation conditions) and magnetic flux density B8 were measured. The results are shown in Table 2.

In Nos. B1 to B12 and b1 to b4, the magnetic flux densities were all the same extent. However, in Nos. B1 to B12 where the relationship of the glass coating thickness satisfied the above provision, the core loss was a good one of less than 0.750W/kg, while in Nos. b1 to b4 where the relationship of the glass coating thickness was outside the range of the above provision, the core loss was a poor 0.750W/kg or more. In b5 and b6, the relationship of the glass coating thickness was outside the range of the above provision and at the same time poor decarburization led to a remarkably inferior core loss. Furthermore, in b7 and b8 as well, the relationship of the glass coating thickness was outside the range of the above provision and the magnetic flux densities was low and, as a result, the core loss was remarkably inferior.

[Table 1]

| No. | Lasering conditions | Decarburization annealing conditions | Grooves | | | | Glass coating thickness | | | | | Evaluation of properties — Magnetic properties (steel sheet) | | Remarks |
| | Focused spot diameter ratio dL/dC | Oxygen potential $PH_2O/PH_2$ | Angle θ | Width W | Depth D | Pitch P | Steel sheet surface flat part t1 | Groove deepest part t2 | Groove side part t3 | (t2+t3)/2 | Film thickness ratio (t2+t3)/2 /t1 | Magnetic flux density B8 | Core loss W17/50 | |
| | | | (°) | (μm) | (μm) | (mm) | (μm) | (μm) | (μm) | | | (T) | (W/kg) | |
| A1 | 0.250 | 0.30 | 0 | 50 | 25 | 5.0 | 4.0 | 5.0 | 4.2 | 4.6 | 1.2 | 1.895 | 0.740 | Ex. |
| A2 | 0.250 | 0.30 | 35 | 50 | 25 | 4.0 | 3.8 | 4.5 | 3.9 | 4.2 | 1.1 | 1.890 | 0.744 | |
| A3 | 0.250 | 0.30 | 5 | 25 | 25 | 2.0 | 3.5 | 4.3 | 3.9 | 4.1 | 1.2 | 1.899 | 0.745 | |
| A4 | 0.250 | 0.30 | 10 | 100 | 25 | 3.0 | 4.8 | 5.1 | 4.6 | 4.9 | 1.0 | 1.889 | 0.749 | |
| A5 | 0.250 | 0.40 | 5 | 45 | 15 | 4.0 | 5.1 | 5.3 | 5.0 | 5.2 | 1.0 | 1.885 | 0.738 | |
| A6 | 0.250 | 0.40 | 7.5 | 40 | 35 | 3.5 | 5.2 | 5.4 | 5.1 | 5.3 | 1.0 | 1.876 | 0.744 | |
| A7 | 0.250 | 0.40 | 12.5 | 35 | 25 | 2.0 | 4.3 | 4.8 | 4.9 | 4.9 | 1.1 | 1.890 | 0.745 | |
| A8 | 0.250 | 0.35 | 10 | 25 | 22 | 25.0 | 4.8 | 5.3 | 4.9 | 5.1 | 1.1 | 1.886 | 0.742 | |
| A9 | 0.250 | 0.55 | 10 | 30 | 25 | 2.0 | 4.7 | 4.7 | 4.8 | 4.8 | 1.0 | 1.884 | 0.748 | |
| A10 | 0.250 | 0.45 | 10 | 28 | 22 | 4.0 | 4.5 | 4.6 | 4.8 | 4.7 | 1.0 | 1.887 | 0.736 | |
| A11 | 0.250 | 0.35 | 10 | 29 | 24 | 3.0 | 4.8 | 4.9 | 4.8 | 4.9 | 1.0 | 1.884 | 0.745 | |
| a1 | 1.500 | 0.30 | 50 | 30 | 20 | 3.0 | 4.5 | 4.5 | 4.7 | 4.6 | 1.0 | 1.897 | 0.772 | |
| a2 | 1.500 | 0.30 | 46 | 35 | 21 | 3.0 | 3.9 | 4.3 | 4.5 | 4.4 | 1.1 | 1.887 | 0.762 | |
| a3 | 1.500 | 0.30 | 10 | 5 | 18 | 5.0 | 4.1 | 4.2 | 4.5 | 4.4 | 1.1 | 1.886 | 0.788 | |
| a4 | 1.500 | 0.30 | 5 | 310 | 22 | 4.0 | 4.2 | 4.7 | 4.9 | 4.8 | 1.1 | 1.874 | 0.765 | |
| a5 | 1.500 | 0.40 | 15 | 30 | 8 | 3.0 | 4.1 | 4.7 | 4.9 | 4.8 | 1.2 | 1.891 | 0.766 | |
| a6 | 1.500 | 0.40 | 12.5 | 35 | 42 | 2.5 | 4.5 | 4.6 | 4.7 | 4.7 | 1.0 | 1.892 | 0.759 | |
| a7 | 1.500 | 0.40 | 20 | 32 | 25 | 0.9 | 4.3 | 5.1 | 4.6 | 4.9 | 1.1 | 1.887 | 0.761 | |
| a8 | 1.500 | 0.40 | 0 | 33 | 30 | 31.0 | 3.5 | 3.8 | 4.0 | 3.9 | 1.1 | 1.886 | 0.772 | |

(continued)

| No. | Lasering conditions Focused spot diameter ratio dL/dC | Decarburization annealing conditions Oxygen potential PH₂O/PH₂ | Grooves Angle θ (°) | Grooves Width W (μm) | Grooves Depth D (μm) | Grooves Pitch P (mm) | Glass coating thickness Steel sheet surface flat part t1 (μm) | Glass coating thickness Groove deepest part t2 (μm) | Glass coating thickness Groove side part t3 (μm) | Glass coating thickness (t2+t3)/2 | Glass coating thickness Film thickness ratio (t2+t3)/2 /t1 | Evaluation of properties Magnetic properties (steel sheet) Magnetic flux density B8 (T) | Evaluation of properties Magnetic properties (steel sheet) Core loss W17/50 (W/kg) | Remarks |
|---|---|---|---|---|---|---|---|---|---|---|---|---|---|---|
| a9 | 1.500 | 0.40 | 2.5 | 28 | 32 | 5.0 | 4.7 | 4.4 | 4.2 | 4.3 | 0.9 | 1.875 | 0.771 | Comp. ex. |
| a10 | 0.250 | 0.40 | 50 | 40 | 25 | 3.0 | 4.1 | 4.3 | 4.5 | 4.4 | 1.1 | 1.887 | 0.779 | |
| a11 | 0.250 | 0.50 | 5 | 3 | 20 | 3.0 | 4.0 | 4.5 | 3.9 | 4.2 | 1.1 | 1.889 | 0.782 | |
| a12 | 0.250 | 0.50 | 10 | 320 | 25 | 3.0 | 4.3 | 5.0 | 4.6 | 4.8 | 1.1 | 1.885 | 0.788 | |
| a13 | 0.250 | 0.50 | 10 | 50 | 5 | 3.0 | 4.2 | 4.3 | 5.0 | 4.7 | 1.1 | 1.884 | 0.764 | |
| a14 | 0.250 | 0.50 | 20 | 50 | 50 | 3.0 | 4.0 | 4.1 | 4.9 | 4.5 | 1.1 | 1.887 | 0.766 | |
| a15 | 0.250 | 0.50 | 20 | 50 | 20 | 0.9 | 4.1 | 4.2 | 4.3 | 4.3 | 1.0 | 1.888 | 0.768 | |
| a16 | 0.250 | 0.50 | 15 | 40 | 15 | 32.0 | 4.5 | 5.2 | 4.5 | 4.9 | 1.1 | 1.889 | 0.777 | |

[Table 2]

| No. | Lasering conditions | Decarburization annealing conditions | Grooves | | | | Glass coating thickness | | | | | Evaluation of properties | | Remarks |
| | | | | | | | | | | | | Magnetic properties (steel sheet) | | |
| | Focused spot diameter ratio dL/dC | Oxygen potential $PH_2O/PH_2$ | Angle $\theta$ | Width W | Depth D | Pitch P | Steel sheet surface flat part t1 | Groove deepest part t2 | Groove side part t3 | (t2+-t3)/2 | Film thickness ratio (t2+t3)/2 | Magnetic flux density B8 | Core loss W17/50 | |
| | | | (°) | ($\mu$m) | ($\mu$m) | (mm) | ($\mu$m) | ($\mu$m) | ($\mu$m) | | /tl | (T) | (W/kg) | |
| B1 | 0.100 | 0.35 | 10 | 30 | 25 | 3.0 | 4.5 | 4.7 | 4.8 | 4.8 | 1.1 | 1.889 | 0.745 | Ex. |
| B2 | 0.950 | 0.35 | 10 | 30 | 25 | 3.0 | 4.3 | 4.8 | 5.1 | 5.0 | 1.2 | 1.887 | 0.738 | |
| B3 | 0.020 | 0.35 | 10 | 30 | 25 | 3.0 | 4.2 | 6.1 | 5.8 | 6.0 | 1.4 | 1.886 | 0.746 | |
| B4 | 0.250 | 0.40 | 10 | 30 | 25 | 3.0 | 3.9 | 4.2 | 5.0 | 4.6 | 1.2 | 1.879 | 0.742 | |
| B5 | 0.600 | 0.40 | 10 | 30 | 25 | 3.0 | 4.4 | 4.8 | 5.0 | 4.9 | 1.1 | 1.901 | 0.735 | |
| B6 | 0.583 | 0.40 | 10 | 30 | 25 | 3.0 | 4.5 | 4.9 | 4.9 | 4.9 | 1.1 | 1.893 | 0.745 | |
| B7 | 0.571 | 0.40 | 10 | 30 | 25 | 3.0 | 5.1 | 5.2 | 5.0 | 5.1 | 1.0 | 1.892 | 0.748 | |
| B8 | 0.563 | 0.40 | 10 | 30 | 25 | 3.0 | 5.0 | 5.1 | 4.9 | 5.0 | 1.0 | 1.879 | 0.739 | |
| B9 | 0.010 | 0.40 | 10 | 30 | 25 | 3.0 | 4.9 | 5.8 | 5.6 | 5.7 | 1.2 | 1.889 | 0.741 | |
| B10 | 0.688 | 0.40 | 10 | 30 | 25 | 3.0 | 4.6 | 4.9 | 4.8 | 4.9 | 1.1 | 1.902 | 0.742 | |
| B11 | 0.600 | 0.40 | 10 | 30 | 25 | 3.0 | 4.7 | 4.9 | 5.0 | 5.0 | 1.1 | 1.893 | 0.735 | |
| B12 | 0.020 | 0.40 | 10 | 30 | 25 | 3.0 | 4.8 | 5.7 | 5.4 | 5.6 | 1.2 | 1.893 | 0.738 | |

(continued)

| No. | Lasering conditions | Decarburization annealing conditions | Grooves | | | | Glass coating thickness | | | | | Evaluation of properties Magnetic properties (steel sheet) | | Remarks |
|---|---|---|---|---|---|---|---|---|---|---|---|---|---|---|
| | Focused spot diameter ratio dL/dC | Oxygen potential $PH_2O/PH_2$ | Angle θ | Width W | Depth D | Pitch P | Steel sheet surface flat part t1 | Groove deepest part t2 | Groove side part t3 | (t2+t3)/2 | Film thickness ratio (t2+t3)/2 | Magnetic flux density B8 | Core loss W17/50 | |
| | | | (°) | (μm) | (μm) | (mm) | (μm) | (μm) | (μm) | | /tl | (T) | (W/kg) | |
| b1 | 1.100 | 0.40 | 10 | 30 | 25 | 3.0 | 4.7 | 4.1 | 4.0 | 4.1 | 0.9 | 1.889 | 0.789 | |
| b2 | 26.667 | 0.40 | 10 | 30 | 25 | 3.0 | 4.8 | 4.2 | 4.5 | 4.4 | 0.9 | 1.874 | 0.802 | |
| b3 | 16.000 | 0.40 | 10 | 30 | 25 | 3.0 | 5.0 | 4.5 | 3.2 | 3.9 | 0.8 | 1.892 | 0.799 | Comp. ex. |
| b4 | 1.200 | 0.40 | 10 | 30 | 25 | 3.0 | 4.9 | 3.9 | 4.2 | 4.1 | 0.8 | 1.896 | 0.789 | |
| b5 | 0.150 | 0.15 | 10 | 30 | 25 | 3.0 | 0.1 | 0 | 0 | 0.0 | 0.0 | 1.901 | 0.921 | |
| b6 | 0.150 | 0.12 | 10 | 30 | 25 | 3.0 | 0.1 | 0 | 0 | 0.0 | 0.0 | 1.899 | 0.922 | |
| b7 | 0.150 | 0.98 | 10 | 30 | 25 | 3.0 | 7.2 | 6.9 | 7.3 | 7.1 | 1.0 | 1.857 | 0.821 | |
| b8 | 0.150 | 1.10 | 10 | 30 | 25 | 3.0 | 8.3 | 8.2 | 8.2 | 8.2 | 1.0 | 1.849 | 0.815 | |

INDUSTRIAL APPLICABILITY

The present invention can be utilized for example for transformer use winding cores and other industrial equipment utilizing grain-oriented electrical steel sheet.

REFERENCE SIGNS LIST

1: base material steel sheet
2: groove
3: base material steel sheet
4: glass coating
5: base material steel sheet
6: glass coating
θ: angle formed by direction perpendicular to rolling direction of base material steel sheet (sheet width direction) and longitudinal direction of groove
W: width of grooves
D: depth of grooves
P: pitch of grooves
t1: glass coating thickness of flat parts of base material steel sheet
t2: glass coating thickness of deepest parts of grooves
t3: glass coating thickness of side parts of grooves

**Claims**

1. Grain-oriented electrical steel sheet comprising a base material steel sheet having a plurality of grooves on a surface of the steel sheet and a glass coating on the surface of the base material steel sheet, in which grain-oriented electrical steel sheet,

   an angle θ formed by a direction perpendicular to a rolling direction and a sheet thickness direction of the base material steel sheet and a longitudinal direction of the grooves is 0 to 40°, a width W of the grooves is 20 to 300 $\mu$m, a depth D of the grooves is 10 $\mu$m to 40 $\mu$m, and a pitch P of the grooves in the rolling direction is 1.0 to 30.0 mm, and,
   when a thickness of the glass coating at flat parts of the surface of the base material steel sheet is 11, a glass coating thickness of deepest parts of the grooves in the recessed parts of the grooves is t2, and a glass coating thickness of side parts of the grooves is t3, the relationship of formula (1) is satisfied:

$$(t2+t3)/2 \geq t1 \ ... \ \text{formula (1)}$$

2. A method of production of grain-oriented electrical steel sheet according to claim 1,
   which method of production of the grain-oriented electrical steel sheet includes

   a groove forming step of lasering the surface of steel sheet to form grooves and
   an annealing step following the groove forming step,
   as conditions for lasering in the groove forming step, a focused spot diameter dL of the laser in the rolling direction and a focused spot diameter dC in the sheet width direction satisfy formula (3) and an oxygen potential $(PH_2O/PH_2)$ in the annealing step is 0.20 or more and 0.85 or less.

$$0.010 \leq dL/dC \leq 1.000 \ ... \ \text{formula (3)}$$

Fig. 1

Fig. 2

Fig. 3

## INTERNATIONAL SEARCH REPORT

International application No.

**PCT/JP2023/013939**

**A. CLASSIFICATION OF SUBJECT MATTER**

*C21D 8/12*(2006.01)i; *C22C 38/00*(2006.01)i; *C22C 38/06*(2006.01)n; *H01F 1/147*(2006.01)i
FI: C22C38/00 303U; H01F1/147 183; C21D8/12 D; C22C38/06

According to International Patent Classification (IPC) or to both national classification and IPC

**B. FIELDS SEARCHED**

Minimum documentation searched (classification system followed by classification symbols)

C21D8/12; C21D9/46; C22C38/00; C22C38/06; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | 佐藤　圭司　ほか著, 耐熱型磁区細分化方向性電磁鋼板, 川崎製鉄技報, 1997, vol. 29, no. 3, pp. 153-158, <br> in particular, 4.1 Process and features, photo 1, (SATO, Keiji et al. Heat-Proof Domain-Refined Grain-Oriented Electrical Steel. Kawasaki steel technical report.) | 1 |
| A | WO 2019/156127 A1 (NIPPON STEEL CORPORATION) 15 August 2019 (2019-08-15) <br> claims, examples 1-3 | 1-2 |
| A | JP 2022-22494 A (NIPPON STEEL CORPORATION) 07 February 2022 (2022-02-07) <br> entire text, all drawings | 1-2 |
| A | JP 2022-509866 A (POSCO) 24 January 2022 (2022-01-24) <br> entire text, all drawings | 1-2 |
| A | KR 10-2021-0080085 A (POSCO) 30 June 2021 (2021-06-30) <br> entire text, all drawings | 1-2 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 June 2023** | **11 July 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/013939**

| Patent document cited in search report | | | Publication date (day/month/year) | Patent family member(s) | | | Publication date (day/month/year) |
|---|---|---|---|---|---|---|---|
| WO | 2019/156127 | A1 | 15 August 2019 | US | 2020/0362431 | A1 | |
| | | | | claims, examples 1-3 | | | |
| | | | | EP | 3751013 | A1 | |
| | | | | KR | 10-2020-0103096 | A | |
| | | | | CN | 111684086 | A | |
| | | | | BR | 112020014925 | A2 | |
| | | | | RU | 2748773 | C1 | |
| JP | 2022-22494 | A | 07 February 2022 | (Family: none) | | | |
| JP | 2022-509866 | A | 24 January 2022 | US | 2022/0042126 | A1 | |
| | | | | entire text, all drawings | | | |
| | | | | WO | 2020/111735 | A2 | |
| | | | | EP | 3889320 | A2 | |
| | | | | KR | 10-2020-0066061 | A | |
| | | | | CN | 113166950 | A | |
| KR | 10-2021-0080085 | A | 30 June 2021 | US | 2023/0060105 | A1 | |
| | | | | entire text, all drawings | | | |
| | | | | WO | 2021/125902 | A2 | |
| | | | | JP | 2023-507438 | A | |
| | | | | EP | 4079877 | A2 | |
| | | | | CN | 114829639 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62054873 B
- JP 62053579 B
- JP 2003129135 A
- WO 2019156127 A
- WO 2011007771 A